# EUROPEAN PATENT APPLICATION

(11) **EP 4 467 527 A1**
(43) Date of publication of application: **27.11.2024**
(21) Application number: 22922232.8
(22) Date of filing: 28.12.2022
(51) Int. Cl.: C04B 35/488, C04B 35/48

(54) **SINTERED BODY AND METHOD FOR PRODUCING SAME**

(30) Priority: 18.01.2022 JP 2022005933
(71) Applicant: Tosoh Corporation, Yamaguchi 746-8501 (JP)
(72) Inventor: SHIMOYAMA, Tomotaka, Ayase-shi, Kanagawa 252-1123 (JP); KURAMOTO, Yasunori, Ayase-shi, Kanagawa 252-1123 (JP)
(74) Representative: Müller-Boré & Partner Patentanwälte PartG mbB
(86) International application number: PCT/JP2022/048472
(87) International publication number: WO 2023/140082

(57) **Abstract**

There is provided at least one of a sintered body having both excellent mechanical strength and translucency and a method for producing the sintered body. The sintered body comprises a matrix of zirconia in which a stabilizing element and lanthanum are dissolved to form a solid solution, the zirconia having a cubic phase fraction of 95% or more, and in which the amount of the stabilizing element is 8% or more by mole and 12% or less by mole.

## Description

### Technical Field

The present disclosure relates to a sintered body and a method for producing the same.

### Background Art

Glass materials, such as quartz glass and heat-resistant glass, are used as window materials for use in blast furnaces, semiconductor manufacturing apparatuses, and so forth. These glass materials have excellent translucency, but have the drawbacks of low mechanical strength and are weak against physical impact.

A translucent zirconia sintered body containing zirconia as a main component and having translucency is known as a material having mechanical strength superior to that of a glass material and having translucency. The translucent zirconia sintered body can also transmit infrared light. It is thus possible to measure the temperature of an object to be heated in a furnace using an infrared thermometer through a window material. For this reason, studies have been conducted on translucent zirconia sintered bodies.

For example, Patent Literature 1 discloses a translucent zirconia sintered body containing 2% to 4% by mole of yttria.

Patent Literature 2 discloses a translucent zirconia sintered body containing 3% to 20% by mole of titania and 60 to 15% by mole of yttria.

### Citation List

### Patent Literature

PTL 1: Japanese Unexamined Patent Application Publication No. 2010-150063
PTL 2: Japanese Unexamined Patent Application Publication No. 2011-011970

### Summary of Invention

### Technical Problem

The translucent zirconia sintered body described in Patent Literature 1 has excellent mechanical strength (a biaxial flexural strength of 1,000 MPa or more), but has low translucency (a total transmittance of 40% or less at a sample thickness of 1 mm and a measurement wavelength of 600 nm). For this reason, when the sintered body was used as a window material, it appeared cloudy like frosted glass, thereby inhibiting the sufficient observation of the state inside.

The zirconia sintered body described in Patent Literature 2 has excellent translucency (an in-line transmittance of 73% to 75% at a sample thickness of 1 mm and a measurement wavelength of 600 nm), but has low mechanical strength (a three-point flexural strength of 255 MPa). For this reason, when the sintered body was used as a window material, there was a high possibility of, for example, impact fracture and surface damage due to physical collisions.

Therefore, in a translucent zirconia sintered body used as a window material, there is a demand for a translucent zirconia sintered body having superior mechanical strength and translucency.

It is an object of the present disclosure to provide at least one of a translucent zirconia sintered body that forms a solid solution with lanthanum and that has a controlled crystal structure, the sintered body having both excellent mechanical strength and translucency, and a method for producing the sintered body. Preferably, it is an object of the present disclosure to provide at least one of a zirconia sintered body having both excellent mechanical strength and transparency and a method for producing the sintered body. Solution to Problem

The inventors have found that a sintered body having both excellent mechanical strength and translucency, and furthermore, a sintered body having both excellent mechanical strength and transparency can be obtained by using, as a matrix, zirconia containing a stabilizing element and a specific amount of lanthanum and having a cubic phase fraction of a certain level or more. These findings have led to the completion of the invention according to the present disclosure.

The present invention is defined in the claims, and the gist of the present disclosure is described below.
[1] A sintered body, comprising a matrix of zirconia in which a stabilizing element and lanthanum are dissolved to form a solid solution, the zirconia having a cubic phase fraction of 95% or more,
   in which the amount of the stabilizing element contained is 8% or more by mole and 12% or less by mole.
[2] The sintered body described in [1], in which the lanthanum content is 1% or more by mole and 10% or less by mole.
[3] The sintered body described in [1] or [2], in which the stabilizing element is at least one selected from the group consisting of yttrium, scandium, calcium, magnesium and cerium.
[4] The sintered body described in any one of [1] to [3], in which the stabilizing element is yttrium.
[5] The sintered body described in any one of [1] to [4], in which an in-line transmittance at a sample thickness of 1 mm is 55% or more.
[6] The sintered body described in any one of [1] to [5], in which a biaxial flexural strength is 500 MPa or more.
[7] A method for producing the sintered body described in any one of [1] to [6], comprising: a mixing step of mixing a zirconia source, a stabilizing element source and a lanthanum source to prepare a mixed powder; a molding step of molding the mixed powder to provide a green body; a sintering step of placing the green body in an inner container, placing the inner container in an outer container and sintering the green body at a sintering temperature of 1,650°C or higher to provide a sintered body; and a temperature lowering step of lowering the temperature from the sintering temperature to 1,000°C at a temperature lowering rate of more than 1 °C/min.
[8] The method for producing the sintered body described in [7], in which the outer container is an outer container made of carbon.
[9] A window material, comprising the sintered body described in any one of [1] to [6].

### Advantageous Effects of Invention

According to the present disclosure, it is possible to provide at least one of a sintered body having both excellent mechanical strength and translucency and a method for producing the sintered body. Furthermore, the present disclosure can provide at least one of a zirconia sintered body having both excellent mechanical strength and transparency and a method for producing the sintered body.

### Brief Description of Drawings

[Fig. 1] A schematic view illustrating an example of the placement of a green body in a sintering step.
[Fig. 2] An XRD pattern of a sintered body of Example 1.
[Fig. 3] An XRD pattern of a sintered body of Comparative Example 3.

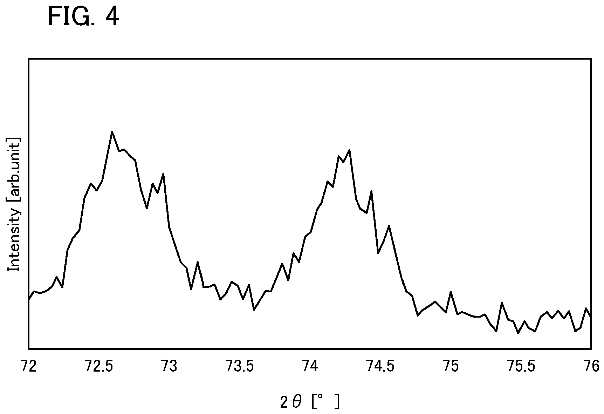

[Fig. 4] An XRD pattern of a sintered body of Comparative Example 4.

### Description of Embodiments

A sintered body of the present disclosure will be described below with reference to an example of an embodiment.

A sintered body of the present embodiment is a sintered body in which not only lanthanum (La) is simply contained in the sintered body, but also lanthanum is dissolved in zirconia to form a solid solution (hereinafter, also referred to as "lanthanum-dissolved zirconia sintered body"). When lanthanum is dissolved to form a solid solution, a finer texture structure of the crystal grains of the sintered body is provided.

In the sintered body of the present embodiment, it can be confirmed from a powder X-ray diffraction (hereinafter, also referred to as "XRD") pattern that lanthanum is dissolved in zirconia to form a solid solution. The sintered body of the present embodiment has a peak of 20 = 72.0 ± 2° (hereinafter, also referred to as a "main peak") in XRD measurement using CuKα radiation (λ = 0.15418 nm) as a radiation source. The main peak is a peak of the XRD peak of cubic zirconia (2θ = 72.0 ± 2°) and is an XRD peak having the maximum diffraction intensity in the XRD pattern of the sintered body. The lattice parameter determined from the main peak is larger than that of the sintered body in which lanthanum is not dissolved. This indicates that lanthanum is dissolved in zirconia to form a solid solution in the sintered body of the present embodiment. For example, in the case of a lanthanum-dissolved zirconia sintered body containing lanthanum and 8% by mole of yttrium serving as a stabilizing element, the lattice parameter of the lanthanum-dissolved zirconia sintered body is larger than the lattice parameter of a sintered body containing 8% by mole of yttrium serving as a stabilizing element and the balance being zirconia. The large lattice constant is confirmed by the shift of the main peak toward lower angles in the XRD pattern.

Preferably, the sintered body of the present embodiment is substantially free of a composite oxide composed of lanthanum and zirconium and a lanthanum oxide (hereinafter, also referred to as "lanthanum oxide or the like"). When lanthanum oxide or the like is not contained, the sintered body of the present embodiment is a sintered body having higher translucency. The absence of lanthanum oxide or the like can be confirmed from the fact that the XRD pattern of the sintered body of the present embodiment has no corresponding XRD peak other than the XRD peak of zirconia. Examples of lanthanum oxide or the like include La₂Zr₂O₇ and La₂O₃.

The lanthanum content of the sintered body of the present embodiment is preferably 1% or more by mole. The lanthanum content (% by mole) is the proportion by mole of lanthanum in terms of oxide to the total of zirconia, the stabilizing element in terms of oxide and lanthanum (La₂O₃) in terms of oxide in the sintered body. For example, when yttrium is contained as a stabilizing element, the lanthanum content [% by mole] may be determined from {La₂O₃ [mol]/(Y₂O₃ + La₂O₃ + ZrO₂) [mol]} × 100.

To dissolve all lanthanum in zirconia to form a solid solution, the lanthanum content of the sintered body is preferably 10% or less by mole. The lanthanum content is preferably 1% or more by mole, 2% or more by mole or 3% or more by mole. The lanthanum content is preferably 10% or less by mole, 7% or less by mole, 6.5% or less by mole or 5% or less by mole. Any combination of these upper and lower limits may be used. Thus, for example, the lanthanum content may be 1% or more by mole and 10% or less by mole, 1% or more by mole and 7% or less by mole, 2% or more by mole and 10% or less by mole, 2% or more by mole and 7% or less by mole, 2% or more by mole and 6.5% or less by mole, 3% or more by mole and 6.5% or less by mole or 3% or more by mole and 5% or less by mole. The lanthanum content is preferably 3% or more by mole and 4.5% or less by mole, more preferably 3.5% or more by mole and 4.2% or less by mole, because the mechanical strength tends to be increased.

Preferably, the sintered body of the present embodiment is free of a lanthanoid rare-earth element except lanthanum. Examples of the lanthanoid rare-earth element except lanthanum include europium (Eu), gadolinium (Gd), terbium (Tb), dysprosium (Dy), holmium (Ho), erbium (Er), thulium (Tm), ytterbium (Yb) and lutetium (Lu). Preferably, the sintered body of the present embodiment is free of a lanthanoid rare-earth element except lanthanum. However, in consideration of measurement errors in composition analysis, for example, the lanthanoid rare-earth element except lanthanum contained in the sintered body of the present embodiment can be contained in an amount of 0.1% or less by mole.

The sintered body of the present embodiment contains a stabilizing element. The stabilizing element is dissolved in zirconia to form a solid solution. When lanthanum and the stabilizing element are dissolved in zirconia to form a solid solution, zirconia of the sintered body contains a cubic phase even in a low-temperature environment such as room temperature.

The stabilizing element is an element that stabilizes zirconia. The stabilizing element is preferably at least one selected from the group consisting of, for example, yttrium (Y), scandium (Sc), calcium (Ca), magnesium (Mg) and cerium (Ce), more preferably at least one selected from the group consisting of calcium, magnesium and yttrium, still more preferably yttrium.

The stabilizing element content of the sintered body of the present embodiment is 8% or more by mole and 12% or less by mole in order to partially stabilize zirconia. The stabilizing element content is preferably 8% or more by mole or 8.5% or more by mole. The stabilizing element content is preferably 12% or less by mole, 11.5% or less by mole or 11% or less by mole. Any combination of these upper and lower limits may be used. Thus, the stabilizing element content is preferably, for example, 8% or more by mole and 11% or less by mole, 8% or more by mole and 10.5% or less by mole or 8.5% or more by mole and 10.5% or less by mole. The stabilizing element content is preferably 8% or more by mole and 9.5% or less by mole, because the transparency is easily increased.

The stabilizing element content (% by mole) is the proportion by mole of the stabilizing element to the total of zirconia, the stabilizing element and lanthanum (La₂O₃) in terms of oxides in the sintered body. When yttrium is contained as a stabilizing element, the stabilizing element content [% by mole] may be determined from {(Y₂O₃) [mol]/(Y₂O₃ + La₂O₃ + ZrO₂) [mol] } × 100. When the stabilizing element contains scandium, calcium, magnesium and cerium, their oxides may be regarded as Sc₂O₃, CaO, MgO and CeO₂, respectively, and converted.

The sintered body of the present embodiment is what is called a zirconia sintered body, and is a sintered body containing zirconia as a matrix (main component). Thus, the total amount of the stabilizing element and lanthanum contained in the sintered body of the present embodiment needs to be less than 50% by mole, and preferably, is 30% or less by mole or 20% or less by mole, and 9% or more by mole or 10% or more by mole. Any combination of these upper and lower limits may be used. Examples thereof include 9% or more by mole and 30% or less by mole, 10% or more by mole and 20% or less by mole and 11% or more by mole and 15% or less by mole. The zirconia content of the sintered body of the present embodiment is preferably more than 50% by mole, 60% or more by mole, 70% or more by mole, 80% or more by mole or 85% or more by mole, and 91% or less by mole or 90% or less by mole.

The sintered body of the present embodiment may contain alumina (Al₂O₃). When alumina is contained, the translucency of the sintered body having particularly high strength is easily increased. When the sintered body of the present embodiment contains alumina, the alumina content is preferably 100 ppm or more by mass or 200 ppm or more by mass, and 2,000 ppm or less by mass or 1,000 ppm or less by mass. Any combination of these upper and lower limits may be used. Thus, the alumina content is preferably, for example, 100 ppm or more by mass and 2,000 ppm or less by mass, more preferably 200 ppm or more by mass and 1,000 ppm or less by mass. The alumina content (ppm by mass) is the proportion by mass of aluminum (Al₂O₃) in terms of oxide to the total mass of zirconia, the stabilizing element, lanthanum (La₂O₃) in terms of oxides and aluminum (Al₂O₃) in terms of oxide in the sintered body. In the case where alumina and lanthanum are contained and where yttrium is contained as a stabilizing element, the alumina content [ppm by mass] may be determined from {Al₂O₃ [g]/(Y₂O₃ + La₂O₃ + Al₂O₃ + ZrO₂) [g] } × 1,000,000.

The sintered body of the present embodiment has the above-described composition, but may contain incidental impurities. An example of the incidental impurities is hafnia (HfO₂). In the calculation of the values related to the composition such as the theoretical densities, the amounts of stabilizing element, additive components and the like in the present embodiment, the calculation may be performed by regarding hafnia (HfO₂), which is an incidental impurity, as zirconia (ZrO₂).

Preferably, other transition metal oxides are not contained. For example, the titania (TiO₂) content is 1% or less by mole, or even 0.1% or less by mole.

As a preferred composition of the sintered body of the present embodiment, the following composition by mole can be exemplified.
Zirconia: 81.5% or more by mole and 90% or less by mole
Stabilizing element: 8% or more by mole and 12% or less by mole
Lanthanum: 2% or more by mole and 6.5% or less by mole

As a particularly preferred composition of the sintered body of the present embodiment, the following composition by mole can be exemplified.
Zirconia: 85% or more by mole and 89% or less by mole
Stabilizing element: 8% or more by mole and 10% or less by mole
Lanthanum: 3% or more by mole and 5% or less by mole

The above composition is calculated on the basis that the total of zirconia, the stabilizing element and lanthanum is 100% by mole. Preferably, zirconia is 85% by mole, the stabilizing element is 10% by mole, and lanthanum is 5% by mole, for example.

The stabilizing element in the above compositions is preferably yttrium.

Zirconia in the sintered body of the present embodiment has a crystal phase of only a cubic phase. The phrase "having a crystal structure of only a cubic phase" means that the cubic phase fraction is 95% or more, preferably 97% or more, more preferably 98% or more, still more preferably 99.5% or more. When the cubic phase fraction is 95% or more, a sintered body having excellent translucency and furthermore, a sintered body having excellent transparency tend to be obtained. The term "cubic phase fraction" refers to the proportion of a cubic phase in the crystal phase of zirconia. The cubic phase fraction can be determined from the following equation (1). For example, the cubic phase fraction can be 99.5% or less, 99.9% or less or 100% or less. For example, the cubic phase fraction is preferably 98% or more and 100% or less, or 99.5% or more and 100% or less. fc = Ic(111)/[Im(111) + Im(11-1) + It(111) + Ic(111)] × 100

In equation (1), f_{c} is the cubic phase fraction (%). I_{c}(111) is the integrated intensity of the XRD peak corresponding to the (111) plane of the cubic phase. I_{c}(111) and Iₘ(11-1) are the integrated intensities of the XRD peaks corresponding to the (111) plane and the (11-1) plane of the monoclinic phase, respectively. Iₜ(111) is the integrated intensity of the XRD peak corresponding to the (111) plane of the tetragonal phase. Each of I_{c}(111) and Iₜ(111) is a total value determined by summing the integrated intensities of multiple XRD peaks.

The XRD pattern in the present embodiment is measured using CuKα radiation as a radiation source, and the measurement conditions include the following conditions.
Accelerating current/voltage: 40 mA/40 kV
Radiation source: CuKα radiation (λ = 1.5405 Å)
Measurement mode: step scan
Scanning condition: 0.04 °/sec
Measurement range: 20 = 20° to 80°
Divergence slit: 0.5 degree
Scattering slit: 0.5 degree
Receiving slit: 0.3 mm
Detector: scintillation counter

The XRD pattern can be measured by using a common powder X-ray diffractometer (for example, UltimaIII, manufactured by Rigaku Corporation).

The integrated intensity of the XRD peak of each crystal plane can be determined using "PRO-FIT" as a calculation program after separating each XRD peak by the method described in H. Toraya, J. Appl. Crystallogr., 19, 440-447 (1986).

The fact that zirconia in the sintered body of the present embodiment has a crystal phase of only a cubic phase, that is, the fact that the cubic phase fraction of the zirconia in the sintered body of the present embodiment is 95% or more can also be determined by the presence or absence of XRD peaks at positions given in Table 1 in addition to the above-mentioned XRD peaks used for calculation of the cubic phase fraction. That is, when peaks are detected at positions of 20 = 73.1 ± 2°, 73.5 ± 2°, 73.7 ± 2° and 73.9 ± 2°, zirconia in the sintered body contains a cubic phase. When peaks are not detected at positions of 2θ = 72 ± 2°, 73 ± 2°, 74.1 ± 2° and 74.4 ± 2°, zirconia in the sintered body does not contain a tetragonal phase. When zirconia in the sintered body of the present embodiment contains a cubic phase and does not contain a tetragonal phase, zirconia in the sintered body of the present embodiment has a crystal phase of only a cubic crystal. That is, the cubic phase fraction of zirconia in the sintered body of the present embodiment is 95% or more.

Note that "± 2°" at each peak position 2θ presented in Table 1 means that all XRD peaks of the sintered body may be shifted by 2° at the maximum in the measurement, and the peak shift is allowed. The four peaks of the cubic phase and the four peaks of the tetragonal phase described in Table 1 are shifted by the same width; thus, whether the shifted peaks are the peaks described in Table 1 can be determined based on the shapes and intervals of the four peaks. For example, the four peaks of the cubic phase may be determined as the four peaks of the cubic phase by the presence of four peaks at intervals of 0.4°, 0.2° and 0.2° from the low-angle side peak corresponding to the peak at 73.1°.

**[Table 1]**

| Cubic phase (2θ) | Tetragonal phase (2θ) |
|---|---|
| 73.1±2° | 72.0±2° |
| 73.5±2° | 73.0±2° |
| 73.7±2° | 74.1±2° |
| 73.9±2° | 74.4±2° |

The average crystal grain size of the sintered body of the present embodiment is preferably 20 µm or more or 30 µm or more. The average crystal grain size is preferably 100 µm or less, 90 µm or less or 60 µm or less. Any combination of these upper and lower limits may be used. Thus, the average crystal grain size of the sintered body is, for example, 20 µm or more and 100 µm or less, 30 µm or more and 90 µm or less or 30 µm or more and 60 µm or less. When the average crystal grain size is in this range, the sintered body has high translucency. In the present embodiment, the measure of the average crystal grain size can be determined by a planimetric method.

The sintered body of the present embodiment preferably has a high density. The density varies in accordance with the amounts of the stabilizing element and the lanthanum. The density of the sintered body of the present embodiment is, for example, 6.0 g/cm³ or more and 6.2 g/cm³ or less, or 6.0 g/cm³ or more and 6.12 g/cm³ or less.

The arithmetic mean roughness (hereinafter, also referred to as "Ra") of a surface of the sintered body of the present embodiment is 20 nm or more, or 25 nm or more. The arithmetic mean roughness is preferably 60 nm or less, or 45 nm or less. Any combination of these upper and lower limits may be used. Therefore, the arithmetic mean roughness of the surfaces is, for example, 20 nm or more and 60 nm or less, preferably 25 nm or more and 45 nm or less. When Ra is more than 60 nm, the mechanical strength, particularly the fracture strength, is lowered. Although Ra is preferably as small as possible, the Ra of the sintered body is about 20 nm even if the sintered body has been subjected to polishing treatment or the like.

The maximum height (hereinafter, also referred to as "Rz") of the surface of the sintered body of the present embodiment is preferably 100 nm or more, or 300 nm or more. The maximum height is preferably 1,000 nm or less, or 900 nm or less. Any combination of these upper and lower limits may be used. Thus, the maximum height of the surface is, for example, 100 nm or more and 1,000 nm or less, and is preferably 300 nm or more and 900 nm or less.

In the sintered body of the present embodiment, the root-mean-square height (hereinafter, also referred to as "Rq") of the surfaces is preferably 10 nm or more, or 20 nm or more. The root-mean-square height is preferably 100 nm or less, or 50 nm or less. Any combination of these upper and lower limits may be used. Thus, the root-mean-square height of the surface is, for example, 10 nm or more and 100 nm or less, and is preferably 20 nm or more and 50 nm or less.

In the present embodiment, Ra, Rz and Rq can be measured by methods according to JIS B 0601.

The sintered body of the present embodiment preferably has no polishing mark on the surface thereof. Usually, a surface of a sintered body immediately after sintering is rough. Thus, the surface is smoothed by performing a posttreatment such as polishing. However, polishing marks are formed on the surface of the sintered body by the posttreatment. The polishing marks are generated along with polishing, and examples thereof include a regular streak-like pattern. In contrast, the sintered body of the present embodiment preferably has practical smoothness in a state after sintering, and in this case, the sintered body satisfies Ra, Rz and Rq described above without having a polishing mark. The polishing marks can be observed by SEM observation of the surface of the sintered body.

The sintered body of the present embodiment has high translucency.

The sintered body of the present embodiment preferably has a total transmittance of 55% or more, more preferably 60% or more, as measured in accordance with JIS K 7361-1 at a sample thickness of 1 mm. For example, the total transmittance can be 76% or less, or even 70% or less. For example, the total transmittance of the sintered body of the present embodiment can be 60% or more and 76% or less, 60% or more and 70% or less or 60% or more and 65% or less.

The sintered body of the present embodiment preferably has an in-line transmittance of 55% or more, more preferably 60% or more, as measured in accordance with JIS K 7361-1 at a sample thickness of 1 mm. For example, the in-line transmittance can be 70% or less, or even 68% or less. The in-line transmittance is one of indexes indicating transparency, and a higher linear transmittance is preferred because a sintered body has higher transparency. For example, the in-line transmittance of the sintered body of the present embodiment can be 55% or more and 70% or less, 55% or more and 65% or less or 60% or more and 65% or less.

For example, the total transmittance and the in-line transmittance can be measured by using, as a measurement sample, a sintered body having a sample thickness of 1 mm and a surface roughness Ra of 0.02 µm or less on both sides, and using, as a measurement device, a common haze meter (model name: Haze Meter NDH 2000, manufactured by Nippon Denshoku Industries Co., Ltd.) equipped with illuminant D65 as a light source.

The sintered body of the present embodiment has high mechanical strength. For example, the strength in the present embodiment is 500 MPa or more, even 600 MPa or more, in terms of biaxial flexural strength measured in accordance with ISO/DIS6872. The strength of the sintered body of the present embodiment is preferably 800 MPa or more, or even 1,000 MPa or more, in order to expand the range of applicable applications. For example, the flexural strength can be 1,100 MPa or less, or 1,200 MPa or less. The strength (biaxial flexural strength) of the sintered body of the present embodiment is, for example, 500 MPa or more and 1,200 MPa or less, or 500 MPa or more and 700 MPa or less, and may be 510 MPa or more and 600 MPa or less, or even 510 MPa or more and 550 MPa or less.

As described above, the sintered body of the present embodiment has both excellent mechanical strength and translucency and thus can be used for applications of known translucent zirconia sintered bodies, such as window materials, decorative members, and exterior members of electronic devices. In particular, it can be suitably used for a window material that is required to have high mechanical strength and translucency, or even high mechanical strength and transparency. The window material is not particularly limited as long as it is a member that transmits light rays having a wavelength necessary for visual recognition. Among window materials, it can be suitably used as a window material for a furnace in a high-temperature environment such as a blast furnace, a heating furnace, and a heat treatment furnace, in which the temperature of an object to be heated in the furnace can be measured by using an infrared thermometer through the window material.

A method for producing the sintered body of the present embodiment will be described below.

The sintered body of the present embodiment can be produced by a method for producing the sintered body, the method comprising a mixing step of mixing a zirconia source, a stabilizing element source and a lanthanum source to prepare a mixed powder; a molding step of molding the mixed powder to provide a green body; a sintering step of placing the green body in an inner container, placing the inner container in an outer container and sintering the green body at a sintering temperature of 1,650°C or higher to provide a sintered body; and a temperature lowering step of lowering the temperature from the sintering temperature to 1,000°C at a temperature lowering rate of more than 1 °C/min.

In the mixing step, the zirconia source, the stabilizing element source and the lanthanum source are mixed to prepare a mixed powder. Any mixing method may be used as long as the zirconia source, the stabilizing element source and the lanthanum source are uniformly mixed, and either wet mixing or dry mixing may be used. The mixing method is preferably wet mixing, more preferably wet mixing using at least one of a wet ball mill and a wet stirring mill, because the obtained mixed powder has higher uniformity.

The zirconia source is zirconia or a precursor thereof, and examples thereof include a zirconia powder having a BET specific surface area of 4 m²/g or more and 20 m²/g or less.

The stabilizing element source is a powder of a compound containing at least one selected from the group consisting of yttrium, scandium, calcium, magnesium and cerium, and is preferably a powder of a compound containing yttrium or a precursor thereof.

The zirconia source is preferably a zirconia powder containing a stabilizing element (hereinafter, also referred to as "stabilizing element-containing zirconia"). Such a zirconia powder serves as a zirconia source and a stabilizing element source. The stabilizing element contained in the zirconia powder is preferably at least one selected from the group consisting of yttrium, scandium, calcium, magnesium and cerium, and more preferably yttrium. The stabilizing element-containing zirconia powder is, in terms of oxide, a zirconia powder containing 8% or more by mole and 12% or less by mole of the stabilizing element, preferably a zirconia powder having a BET specific surface area of 4 m²/g or more and 20 m²/g or less and containing 8% or more by mole and 12% or less by mole of the stabilizing element. The amount of stabilizing element contained in the stabilizing element-containing zirconia powder is preferably 8% or more by mole and 12% or less by mole, more preferably 8.5% or more by mole and 11.5% or less by mole, still more preferably 9% or more by mole and 11% or less by mole, in terms of oxide.

The lanthanum source can be a compound containing lanthanum and can be at least one selected from the group consisting of lanthanum oxide, lanthanum hydroxide, lanthanum nitrate, lanthanum sulfate, lanthanum chloride, lanthanum carbonate and pyrochlore-type La₂Zr₂O₇. The lanthanum material is preferably at least one selected from the group consisting of lanthanum hydroxide, lanthanum oxide and La₂Zr₂O₇, more preferably at least one of lanthanum hydroxide and lanthanum oxide, still more preferably lanthanum hydroxide.

The mixed powder may contain an alumina source. The alumina source may be a compound containing aluminum, and is preferably at least one selected from the group consisting of alumina, aluminum hydroxide, aluminum carbonate and spinel, more preferably alumina. For example, the preferred alumina is at least one of α-alumina and γ-alumina, more preferably α-alumina.

The composition of the mixed powder needs to be a desired ratio. For example, the composition contains 80% or more by mole and 91% or less by mole of zirconia, 8% or more by mole and 12% or less by mole of the stabilizing element and 1% or more by mole and 10% or less by mole of lanthanum, in terms of oxides.

A preferable composition of the mixed powder includes the following composition by mole. Zirconia: 81.5% or more by mole and 90% or less by mole, preferably 85% or more by mole and 89% or less by mole Stabilizing element: 8% or more by mole and 12% or less by mole, preferably 8% or more by mole and 10% or less by mole Lanthanum: 2% or more by mole and 6.5% or less by mole, preferably 3% or more by mole and 5% or less by mole

The stabilizing element in the above composition is preferably yttrium.

The mixed powder of the present embodiment may contain a binder. When the binder is contained, the operability (handleability) and the shape retainability are further improved. The binder may be any binder that can be used for granulation or molding of a ceramic material, and is preferably an organic binder. Examples of the binder include one or more selected from the group consisting of poly(vinyl alcohol), poly(vinyl butyral), wax, and an acrylic resin, preferably at least one of poly(vinyl alcohol) and an acrylic resin, more preferably an acrylic resin. In the present embodiment, the acrylic resin is a polymer containing at least one of an acrylate and a methacrylate. Specific examples of the binder include one or more selected from the group consisting of AS-1100, AS-1800 and AS-2000 (all of which are product names, manufactured by Toagosei Co., Ltd.).

For example, the binder content can be 0.5% or more by mass or 1% or more by mass, and 10% or less by mass or 5% or less by mass.

In the molding step, the mixed powder is molded into a green body. Any molding method may be used as long as a green body having a desired shape can be formed. The molding method may be at least one selected from the group consisting of press forming, injection molding, sheet molding, extrusion molding and cast molding, and is preferably at least one of press forming and injection molding.

The green body may have any shape. Examples thereof include freely-selected shapes according to the purpose and use, for example, shapes, such as disk shapes, cylindrical shapes and polyhedral shapes, orthodontic brackets, semiconductor manufacturing jigs and other complex shapes.

In the sintering step, the green body is placed in an inner container, and the inner container is placed in an outer container and sintered, thereby resulting in a sintered body having a highly smooth surface. The containers for sintering are used to avoid a decrease in the smoothness of the surface of the sintered body due to the direct contact of the green body to be sintered with the flow of the atmosphere gas in the sintering furnace, that is, to avoid an increase in the surface roughness of the sintered body due to the direct exposure of the green body to be sintered to the flow of the atmosphere gas introduced into the sintering furnace from the outside of the system.

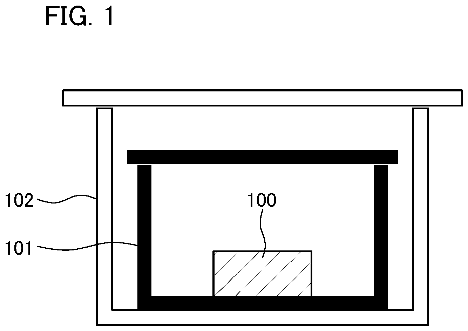

Fig. 1 is a schematic view illustrating an example of the placement of the green body in the sintering step. A green body (100) is disposed inside an inner container

(101), and the inner container (101) is disposed inside an outer container (102). The inner container may have any shape as long as the green body can be disposed therein. The outer container may have any shape as long as the inner container can be disposed therein.

The inner container and the outer container may be containers other than sealed containers, that is, containers that do not block the flow of the atmosphere gas. For example, each container is such that the atmosphere in the container is not a closed system with respect to the atmosphere in the sintering furnace without directly exposing the green body to be sintered to the flow of the atmosphere gas introduced into the sintering furnace from the outside of the system. Specific examples of the container include a covered container, for example, at least one of a covered crucible or a covered sagger. In Fig. 1, the inner container (101) and the outer container (102) are each illustrated as a container with a lid. The inner container (101) is illustrated in a state in which the green body to be sintered is accommodated and a lid is disposed without sealing the inner container (101). The outer container (102) is illustrated in a state in which the inner container (101) is accommodated and a lid is disposed without sealing the outer container (102).

The material of the inner container is at least one of metal oxides and metal nitrides, preferably metal oxides, more preferably at least one selected from the group consisting of alumina, zirconia, mullite, yttria, spinel, magnesia, silicon nitride and boron nitride, more preferably at least one selected from the group consisting of alumina, zirconia, mullite and yttria, still more preferably yttria.

The material of the outer container is at least one selected from the group consisting of carbon, metal oxides and metal nitrides. In particular, the material of the outer container is preferably carbon from the viewpoints of obtaining a sintered body having both excellent mechanical strength and translucency and reducing variations in mechanical strength among sintered bodies. Moreover, the outer container is preferably made of carbon because it is inexpensive and has high industrial utility value, compared with an outer container made of metal oxide or metal nitride. In the production method of the present embodiment, the containers are used in a double container manner; thus, the carbon derived from the container does not adhere to the surface of the green body to be sintered, thereby easily providing a sintered body having excellent mechanical strength and translucency. Furthermore, when the outer container made of carbon is used, variations in mechanical strength between sintered bodies are particularly reduced.

When the sintering step is a two-step sintering process described below, a primary sintered body needs to be placed in the inner container instead of the green body. That is, the secondary sintering needs to be performed by placing the primary sintered body in an inner container, placing the inner container in an outer container, and performing sintering.

In the sintering step, the green body obtained in the molding step is sintered at a sintering temperature of 1,650°C or higher. The crystal structure of the sintered body is considered to be a high-temperature-type crystal structure upon sintering at 1,650°C or higher. The sintering temperature is 1,650°C or higher, preferably 1,700°C or higher, more preferably 1,725°C or higher, still more preferably 1,750°C or higher. When a general-purpose firing furnace is used, for example, the sintering temperature can be 2,000°C or lower, 1,900°C or lower or 1,800°C or lower. For example, the sintering temperature is preferably 1,650°C or higher and 2,000°C or lower, or 1,700°C or higher and 1,900°C or lower.

Any sintering process may be used as long as the sintering is performed at the above sintering temperature. For example, the sintering process can be at least one selected from the group consisting of pressureless sintering, pressure sintering and vacuum sintering. Pressureless sintering and pressure sintering are preferred.

Preferred examples of the sintering process include a sintering process in which only pressureless sintering is performed (hereinafter, also referred to as a "one-step sintering process"), and a sintering process including primary sintering in which a green body is fired at 1,000°C or higher and lower than 1,650°C to provide a primary sintered body and secondary sintering in which the primary sintered body is sintered at 1,650°C or higher (hereinafter, also referred to as a "two-step sintering process").

In the one-step sintering process, a green body may be subjected to pressureless sintering to obtain a sintered body. The pressureless sintering is a process of sintering by simply heating a green body to be sintered without applying an external force to the green body at the time of sintering. In the present embodiment, the green body formed in the molding step may be subjected to pressureless sintering to provide a sintered body. The sintering temperature may be 1,600°C or higher, and is preferably 1,700°C or higher and 1,900°C or lower. The sintering atmosphere may be an oxidizing atmosphere or a reducing atmosphere. For the sake of simplicity, air is preferred.

The two-step sintering process is a process in which a green body is subjected to primary sintering to provide a primary sintered body, and the primary sintered body is subjected to secondary sintering. In the primary sintering, the green body is preferably sintered at 1,000°C or higher and lower than 1,650°C, or even 1,200°C or higher and 1,600°C or lower. The atmosphere of the primary sintering is preferably an oxidizing atmosphere or a reducing atmosphere, and is more preferably an oxidizing atmosphere, and still more preferably air. For example, the primary sintering is preferably pressureless sintering in air at 1,000°C or higher or 1,400°C or higher, and at lower than 1,650°C or 1,520°C or lower. Thereby, the resulting primary sintered body has a finer microstructure. In addition, pores are less likely to be formed in the crystal grains of the primary sintered body.

In the secondary sintering, the primary sintered body is sintered at 1,650°C or higher, preferably 1,700°C or higher, more preferably 1,725°C or higher, still more preferably 1,750°C or higher. To provide a sintered body having high strength, the secondary sintering temperature is 2,000°C or lower, preferably 1,900°C or lower, and more preferably 1,800°C or lower. When the secondary sintering temperature is 2,000°C or lower, coarse crystal grains are less likely to be formed. For example, the secondary sintering temperature is preferably 1,650°C or higher and 2,000°C or lower, or 1,700°C or higher and 1,900°C or lower.

To provide a sintered body having a higher density, the secondary sintering is preferably hot isostatic pressing (hereinafter, also referred to as "HIP") treatment.

The time of the HIP treatment (hereinafter, also referred to as "HIP time") varies depending on the size and amount of primary sintered body to be subjected to HIP and the HIP treatment apparatus, and can be, for example, 10 minutes or more or 30 minutes or more, and 4 hours or less or 2 hours or less. To sufficiently remove pores in the sintered body during the HIP treatment, the HIP time is preferably 10 minutes or more.

Examples of a pressure medium for the HIP treatment (hereinafter, also referred to simply as a "pressure medium") include argon gas, nitrogen gas and oxygen. Common argon gas is convenient.

The pressure of the HIP treatment (hereinafter, also referred to as "HIP pressure") is preferably 5 MPa or more, more preferably 50 MPa or more. When the HIP pressure is 5 MPa or more, the elimination of pores in the sintered body is further promoted. The upper limit of the HIP pressure is not particularly specified. When an ordinary HIP apparatus is used, for example, the HIP pressure can be 200 MPa or less, 50 MPa or more and 200 MPa or less or even 100 MPa or more and 170 MPa or less.

In the temperature lowering step, the temperature is lowered from the secondary sintering temperature to 1,000°C at a temperature lowering rate of more than 1 °C/min. In the case where the secondary sintering temperature is 1,650°C or higher and where the temperature lowering rate is more than 1 °C/min, preferably 5 °C/min or more, more preferably 8 °C/min or more, the resulting sintered body has a zirconia crystal structure of only a cubic phase with high translucency or even high transparency. A temperature lowering rate of 1 °C/min or less results in the formation of precipitates and a monoclinic phase; thus, the resulting sintered body has low translucency. To provide a lanthanum-dissolved zirconia sintered body having higher translucency, for example, the temperature is lowered from the firing temperature to 1,000°C at a temperature lowering rate of preferably 10 °C/min or more, more preferably 15 °C/min or more, still more preferably 30 °C/min or more, yet still more preferably 50 °C/min or more. The upper limit of the temperature lowering rate is not particularly limited, and can be, for example, 150 °C/min or less or 100 °C/min or less.

The production method of the present embodiment may include an annealing step of heat-treating the sintered body after the temperature lowering step. Subjecting the sintered body to the annealing step enables the sintered body to have further improved translucency. In the annealing step, for example, the sintered body is treated in an oxidizing atmosphere at 900°C or higher and 1,200°C or lower, preferably 980°C or higher and 1,030°C or lower.

The sintered body obtained by the above-mentioned method has both excellent mechanical strength and translucency and thus can be used for applications of known translucent zirconia sintered bodies, such as window materials, decorative members, and exterior members of electronic devices. In particular, it can be suitably used for a window material that is required to have high mechanical strength and translucency, or even high mechanical strength and transparency.

### EXAMPLES

While the present disclosure will be specifically described below with reference to examples and comparative examples, the present disclosure is not limited to these examples.

### (Measurement of Average Crystal Grain Size)

A sintered body sample was subjected to surface grinding and then mirror-polished using diamond abrasive grains of 9 pm, 6 µm and 1 µm in sequence. The polished surface was held at 1,400°C for 1 hour, thermally etched and then observed by SEM. The average crystal grain size was determined from the resulting SEM observation view by the planimetric method.

### (Identification of Crystal Structure)

XRD patterns obtained by the XRD measurement of sintered body samples were subjected to identification analysis to identify the crystal structure of each sintered body sample and determine the presence or absence of an impurity layer. The XRD measurement was performed on the mirror-polished sintered body sample using a common powder X-ray diffractometer (model name: UltimaIII, manufactured by Rigaku Corporation). In Table 2, with respect to examples and comparative examples, the detected crystal structures are described as "C: cubic phase" and "T: tetragonal phase" based on the presence or absence of detection of XRD peaks assigned to the respective crystal structures. That is, when only the cubic phase was detected, the structure was described as "C". When the cubic phase and the tetragonal phase were detected, the structure was described as "C + T". No monoclinic phase was detected in any of the samples. Furthermore, the cubic phase fraction was calculated using equation (1) described above.

The XRD measurement was performed using CuKα radiation as a radiation source under the following conditions.
Accelerating current/voltage: 40 mA/40 kV
Radiation source: CuKα radiation (λ = 1.5405 Å)
Measurement mode: step scan
Scanning condition: 0.04 °/sec
Measurement range: 20 = 20° to 80°
Divergence slit: 0.5 degree
Scattering slit: 0.5 degree
Receiving slit: 0.3 mm
Detector: scintillation counter

The XRD pattern was measured by using a common powder X-ray diffractometer (model name, UltimaIII, manufactured by Rigaku Corporation).

### (Measurement of Biaxial Flexural Strength)

The biaxial flexural strength of the sintered body sample was measured by biaxial flexural strength measurement according to ISO/DIS 6872. The thicknesses of the sintered body samples were 1 mm. After the sintered body sample was subjected to surface grinding, the sample was mirror-polished using diamond abrasive grains of 9 pm, 6 µm and 1 µm in sequence, and then the measurement was performed on the sample.

### (Measurement of Total Transmittance and In-line Transmittance)

The total transmittance and the in-line transmittance were measured by a method according to JIS K 7361-1 using a haze meter (model name: NDH 2000, manufactured by Nippon Denshoku Industries Co., Ltd.) and illuminant D65.

Prior to the measurement, both surfaces of the sintered body sample were surface-ground, and then mirror-polished using diamond abrasive grains of 9 pm, 6 µm and 1 µm in sequence so that the surface roughness Ra was 0.02 µm or less.

### <Example 1>

A La(OH)₃ powder was added to a zirconia powder in such a manner that the proportion by mass of the La(OH)₃ powder to a zirconia powder (BET specific surface area: 7 m²/g) containing 8% by mole of yttrium was 11.5% by mass. The mixture was dispersed in pure water to prepare a slurry having a solid content of 50% by mass. The resulting slurry was subjected to grinding with a wet ball mill using zirconia balls having a diameter of 10 mm. The average particle size of the resulting mixed powder was 0.4 µm. The slurry was dried and granulated with a spray dryer to prepare a source powder.

The resulting mixed powder was mixed with an organic binder containing a wax, a plasticizer, and a thermoplastic resin. Thereafter, the mixture was injection-molded to provide a rectangular plate-shaped green body having a size of 30 mm × 25 mm and a thickness of 1.0 mm.

The resulting green body was heated in air at 450°C and then fired in air at 1,500°C for 2 hours to provide a primary sintered body. The resulting primary sintered body was placed in an inner container made of yttria. The inner container containing the primary sintered body was placed in an outer container made of carbon.

In this state, the primary sintered body was subjected to HIP treatment in a 99.9% argon gas atmosphere at a heating rate of 600 °C/h, a HIP temperature of 1,750°C, a HIP pressure of 150 MPa and a holding time of 1 hour. After the HIP treatment, the temperature was lowered from the sintering temperature to room temperature to provide a HIP-treated body. The temperature lowering rate from the HIP temperature to 1,000°C was 45 °C/min. Since the outer container made of carbon was used, sintering is considered to proceed in the reducing atmosphere even under an argon gas atmosphere.

The resulting HIP-treated body was heat-treated at 1,000°C for 1 hour in air to obtain a colorless translucent sintered body. The resulting sintered body was a sintered body composed of zirconia in which 4.0% by mole of lanthanum and 8.0% by mole of yttrium were dissolved to form a solid solution.

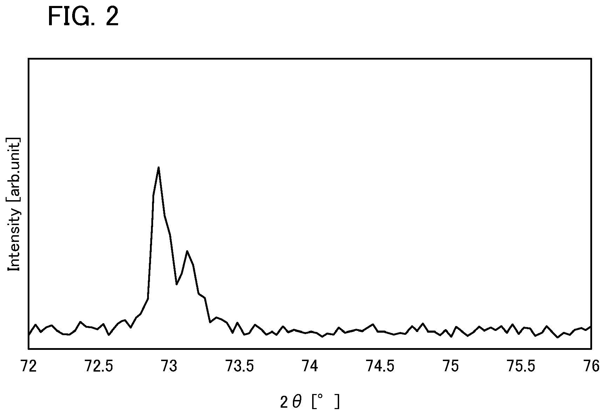

Fig. 2 illustrates an XRD pattern of the sintered body of Example 1. From the XRD pattern in Fig. 2, the peaks of a cubic phase given in Table 1 were observed, and peaks of a tetragonal phase were not observed. The results indicated that the crystal structure of the sintered body of Example 1 was composed of only the cubic phase and contained substantially no tetragonal phase.

The biaxial flexural strength and in-line transmittance of the obtained sintered body were measured. Table 2 presents the evaluation results.

### <Examples 2 and 3>

Zirconia sintered bodies of Examples 2 and 3 were produced in the same manner as in Example 1, except that the mixing proportion of the La(OH)₃ powder and the zirconia powder containing 8% by mole of yttrium was changed so as to achieve the compositions given in Table 2. It was found that the crystal structure of the sintered body of each of Examples 2 and 3 was composed of only a cubic phase and contained substantially no tetragonal phase. The biaxial flexural strength and in-line transmittance of the obtained sintered bodies were measured. Table 2 presents the evaluation results.

### <Example 4 to 6>

Zirconia sintered bodies of Example 4 to 6 were produced in the same way as in Example 1, except that a zirconia powder containing 10% by mole of yttrium was used in place of the zirconia powder containing 8% by mole of yttrium and that the mixing proportion of the La(OH)₃ powder and the zirconia powder containing 10% by mole of yttrium was changed so as to achieve the compositions given in Table 2. It was found that the crystal structure of the sintered body of each of Examples 4 to 6 was composed of only a cubic phase and contained substantially no tetragonal phase. The biaxial flexural strength and in-line transmittance of the obtained sintered bodies were measured. Table 2 presents the evaluation results.

### <Comparative Example 1>

A zirconia sintered body of Comparative Example 1 was produced in the same manner as in Example 1, except that the La(OH)₃ powder was not added to the zirconia powder. It was found that the crystal structure of the sintered body of Comparative Example 1 was composed of only the cubic phase and contained substantially no tetragonal phase. The biaxial flexural strength and in-line transmittance of the obtained sintered body were measured. Table 2 presents the evaluation results.

### <Comparative Example 2>

A zirconia sintered body of Comparative Example 2 was produced in the same manner as in Example 1, except that a zirconia powder containing 10% by mole of yttrium was used in place of the zirconia powder containing 8% by mole of yttrium and that the La(OH)₃ powder was not added to the zirconia powder. It was found that the crystal structure of the sintered body of Comparative Example 2 was composed of only the cubic phase and contained substantially no tetragonal phase. The biaxial flexural strength and in-line transmittance of the obtained sintered body were measured. Table 2 presents the evaluation results.

### <Comparative Example 3>

A zirconia sintered body of Comparative Example 3 was produced in the same manner as in Example 1, except that a zirconia powder containing 10% by mole of yttrium was used in place of the zirconia powder containing 8% by mole of yttrium, a Ti(OH)₂ powder was used in place of the La(OH)₃ powder, the mixing proportion of the Ti(OH)₂ powder and the zirconia powder containing 10% by mole of yttrium was changed so as to achieve the composition given in Table 2, and the HIP temperature was 1,500°C.

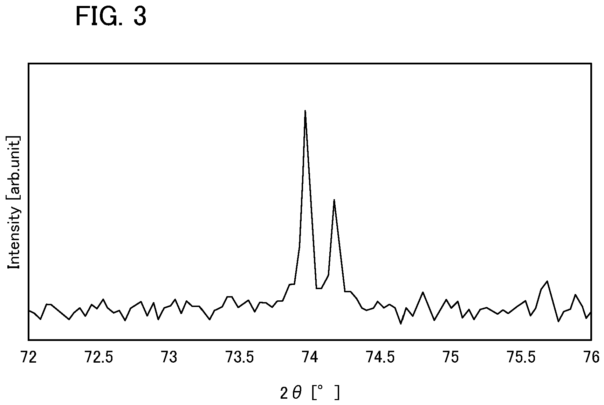

Fig. 3 illustrates an XRD pattern of the sintered body of Comparative Example 3. The XRD pattern of Fig. 3 indicated that the crystal structure of the sintered body of Comparative Example 3 was composed of only a cubic phase and contained substantially no tetragonal phase. The biaxial flexural strength and in-line transmittance of the obtained sintered body were measured. Table 2 presents the evaluation results.

### <Comparative Example 4>

A zirconia sintered body of Comparative Example 4 was produced in the same manner as in Example 1, except that a zirconia powder containing 3% by mole of yttrium was used in place of the zirconia powder containing 8% by mole of yttrium, the outer container was not used, and the temperature lowering rate from the HIP treatment temperature to 1,000°C was 83 °C/min. It was confirmed that the crystal structure of the sintered body of Comparative Example 4 was composed of a tetragonal phase and a cubic phase. The biaxial flexural strength and in-line transmittance of the obtained sintered body were measured. Table 2 presents the evaluation results.

**[Table 2]**

| | Composition of source powder [mol%] | | | Sintering condition | Zirconia sintered body | | | | |
|---|---|---|---|---|---|---|---|---|---|
| | Y₂O₃ | La₂O₃ | TiO₂ | HIP temperature [°C] | Biaxial flexural strength [MPa] | Total transmittance [%] | In-line transmittance [%] | Crystal structure C: cubic phase T: tetragonal phase | Cubic phase fraction [%] |
| Example 1 | 8.0 | 4.0 | - | 1750 | 565 | 69 | 63 | C | 100 |
| Example 2 | 8.0 | 3.0 | - | 1750 | 511 | 69 | 62 | C | 100 |
| Example 3 | 8.0 | 5.0 | - | 1750 | 517 | 70 | 60 | C | 100 |
| Example 4 | 10.0 | 4.0 | - | 1750 | 548 | 66 | 56 | C | 100 |
| Example 5 | 10.0 | 3.0 | - | 1750 | 528 | 64 | 56 | C | 100 |
| Example 6 | 10.0 | 5.0 | - | 1750 | 503 | 66 | 55 | C | 100 |
| Comparative Example 1 | 8.0 | - | - | 1750 | 253 | 62 | 37 | C | 100 |
| Comparative Example 2 | 10.0 | - | - | 1750 | 288 | 65 | 60 | C | 100 |
| Comparative Example 3 | 10.0 | - | 10.0 | 1500 | 255 | 75 | 73 | C | 100 |
| Comparative Example 4 | 3.0 | 4.0 | - | 1750 | 1200 | 65 | 40 | C+T | 48 |

The measurement results of the sintered bodies of Examples 1 to 6 indicates that the sintered bodies according to the present embodiment each have both excellent mechanical strength and translucency, compared with the sintered bodies of Comparative Examples 1 to 4. That is, the sintered bodies of Examples 1 to 6 each had a biaxial flexural strength of 500 MPa or more and an in-line transmittance of 55% or more. In contrast, the sintered bodies of Comparative Examples 1 to 3 each had a flexural strength of 290 MPa or less, indicating low biaxial flexural strength. In addition, the sintered body of Comparative Example 4 had an in-line transmittance of 40%, indicating low transparency.

This application claims priority to Japanese Patent Application No. 2022-5933 filed January 18, 2022, the entire content of which is incorporated herein by reference.

### Reference Signs List

100 green body, 101 inner container, 102 outer container

## Claims

1. A sintered body, comprising a matrix of zirconia in which a stabilizing element and lanthanum are dissolved to form a solid solution, the zirconia having a cubic phase fraction of 95% or more,
wherein an amount of the stabilizing element is 8% or more by mole and 12% or less by mole.

2. The sintered body according to Claim 1, wherein a lanthanum content is 1% or more by mole and 10% or less by mole.

3. The sintered body according to Claim 1 or 2, wherein the stabilizing element is at least one selected from the group consisting of yttrium, scandium, calcium, magnesium and cerium.

4. The sintered body according to any one of Claims 1 to 3, wherein the stabilizing element is yttrium.

5. The sintered body according to any one of Claims 1 to 4, wherein an in-line transmittance at a sample thickness of 1 mm is 55% or more.

6. The sintered body according to any one of Claims 1 to 5, wherein a biaxial flexural strength is 500 MPa or more.

7. A method for producing the sintered body according to any one of Claims 1 to 6, comprising: a mixing step of mixing a zirconia source, a stabilizing element source and a lanthanum source to prepare a mixed powder; a molding step of molding the mixed powder to provide a green body; a sintering step of placing the green body in an inner container, placing the inner container in an outer container and sintering the green body at a sintering temperature of 1,650°C or higher to provide a sintered body; and a temperature lowering step of lowering the temperature from the sintering temperature to 1,000°C at a temperature lowering rate of more than 1 °C/min.

8. The method for producing the sintered body according to Claim 7, wherein the outer container is an outer container made of carbon.

9. A window material, comprising the sintered body according to any one of Claims 1 to 6.
